# EUROPÄISCHE PATENTSCHRIFT

(11) **EP 2 977 292 B1**
(45) Veröffentlichungstag und Bekanntmachung des Hinweises auf die Patenterteilung: **18.10.2017**
(21) Anmeldenummer: 15002076.6
(22) Anmeldetag: 13.07.2015
(51) Int. Cl.: B62B 1/18, B62B 1/20, B62B 5/00

(54) **SCHUBKARRENANTRIEB**
WHEELBARROW DRIVE
ENTRAINEMENT DE BROUETTE

(30) Priorität: 21.07.2014 DE 102014010767
(43) Veröffentlichungstag der Anmeldung: 27.01.2016
(73) Patentinhaber: Feldmann, Martin, 67661 Breitenau (DE)
(72) Erfinder: Feldmann, Martin, 67661 Breitenau (DE)
(74) Vertreter: Hocker, Thomas

(56) Entgegenhaltungen:
- WO-A1-92/07747
- DE-A1- 3 133 922
- US-A- 2 856 017

## Beschreibung

Die Erfindung bezieht sich auf einrädrige Schubkarren mit flexiblem Schubkarrenantrieb wie sie als Bau - und Gartenschubkarren verwendet werden.

Da das Schieben solcher Schubkarren gerade an Steigungen mit zunehmender Beladung einen enormen Kraftaufwand erfordert oder ab einem gewissen Punkt auch nicht mehr zu bewerkstelligen ist, gibt es bereits eine Reihe von Vorschlägen bezüglich Antrieben zur Reduktion dieses Kraftaufwandes.

Hier gibt es diverse Vorschläge, bei denen sowohl Verbrennungs- als auch Elektromotoren zum Einsatz kommen. So offenbart DE 3133922 A1 einen Schubkarren mit einem am Rahmen montierten Motor, der über ein zylinderförmiges Reibrad oder einen Riemen das Laufrad antreibt. Auch DE 69116375 T2 und US 3791470 A zeigen motorisierte Schubkarren, bei denen ein mit dem Rahmen verbundener Motor über eine Kette jeweils das Rad antreiben.

Aus US 2856017 zeigt einen Schubkarren, bei dem ein Motor über mehrere Riemen mehrere Reibräder antreibt, die wiederum das Rad des Schubkarrens antreiben. WO 92/07747 offenbart einen Schubkarren mit am Rahmen montierten Antriebsmotor. Über eine Kette wird das Rad des Schubkarrens angetrieben.

Zur Kraftübertragung vom Motor zum Schubkarrenrad bilden beim Stand der Technik Antrieb und Schubkarre eine fest aufeinander abgestimmte Einheit. Der Antrieb ist direkt integriert oder lässt sich nachträglich montieren, jedoch nicht wieder ohne größeren Aufwand von der Schubkarre abmontieren und an einer anderen Schubkarre als Antrieb nutzen. Käuflich kann zumeist nur eine Einheit aus Schubkarre mit Antrieb erworben werden. Da in vielen Fällen nur ein zeitweiser Antrieb notwendig ist, stellt ein montierter Antrieb aufgrund der erhöhten Diebstahlgefahr häufig einen Nachteil dar.

US 2686571 A zeigt einen Kinderwagenantrieb. Ein Verbrennungsmotor treibt über einen Riemen zwei Antriebsräder an, welche auf die Räder einer der beiden Achsen wirken. Die Antriebseinheit wird an einer Kante der Ladefläche eingehängt; die Antriebsräder liegen an den Rädern des Wagens auf, so dass die Anpresskraft der Antriebsräder auf die Räder des Wagens durch die Schwerkraft bewirkt wird. Bei Unebenheiten des Weges kann es somit zu einem zeitweisen Abheben der Antriebsräder von den Rädern des Wagens und somit einer Zugkraftunterbrechung und ein Überdrehen des Motors kommen.

Ziel der vorliegenden Erfindung ist ein Schubkarren mit Antrieb, der sich leicht und schnell an den meisten handelsüblichen Schubkarren anbringen, verwenden und wieder demontieren lässt und somit auch geeignet ist, an bereits vorhandenen Schubkarren als Antrieb nachgerüstet zu werden. Es soll sich demnach um einen abnehmbaren Schubkarrenantrieb handeln, den man bedarfsgerecht flexibel an unterschiedlichen Schubkarrenmodellen einsetzen kann.

Erfindungsgemäß wird diese Aufgabe mittels eines Schubkarrenantriebs mit den Merkmalen des Anspruchs 1 gelöst.

Vorteilhafte Ausgestaltungen ergeben sich durch die Merkmale der abhängigen Ansprüche.

Die Erfindung wird nun anhand der Figuren detailliert erläutert. Hierbei zeigen:
Figur 1 einen Schubkarren mit erfindungsgemäßem Antrieb gemäß einer ersten Variante,
Figur 2 einen Teil des erfindungsgemäßen Antriebs sowie
Figur 3 eine zweiter Varianten des erfindungsgemäßen Schubkarrenantriebs.

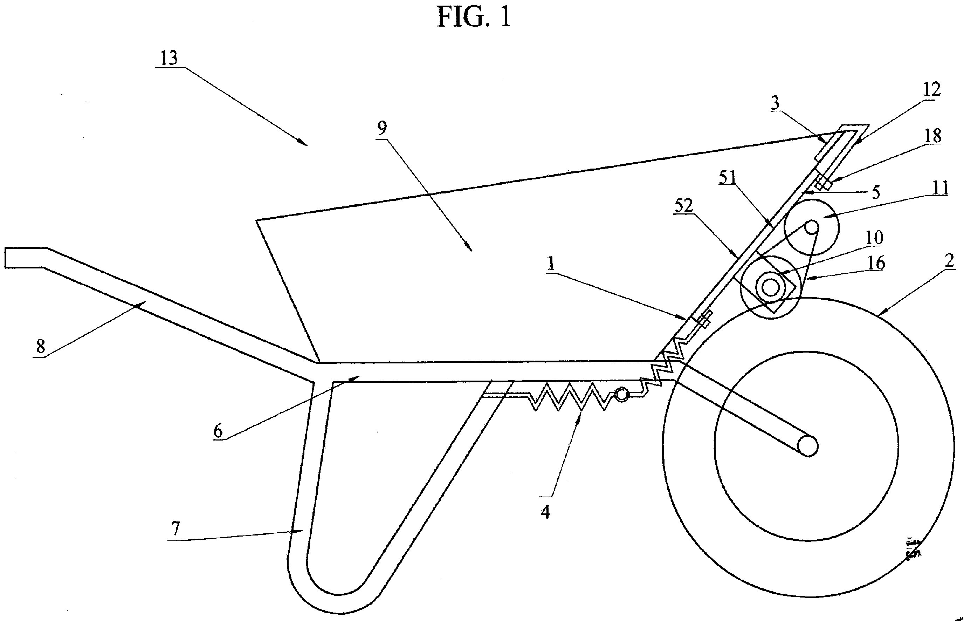

Figur 1 zeigt einen Schubkarren 13 mit einer Wanne 9 zur Aufnahme des zu transportierenden Materials. Die Wanne 9 ist auf einem Rahmen 6 montiert. An diesem Rahmen 6 ist in einem vorderen schrägen Muldenbereich 1 unter der Wanne 9 ein zentrales Schubkarrenrad 2 angebracht. Zwei Stützen 7 im hinteren Bereich unter der Wanne 9, gegenüber dem Schubkarrenrad 2, dienen zum Abstellen des Schubkarrens 13. Hinter der Wanne 9 bietet der Rahmen 6 einen rechten und linken Holm 8 zum Anhaben, Schieben und Lenken der Schubkarre 13. Bei Schubkarren 13 wird über diese Holme 8 bei Abwesenheit eines Antriebs manuell die Schubkraft eingeleitet.

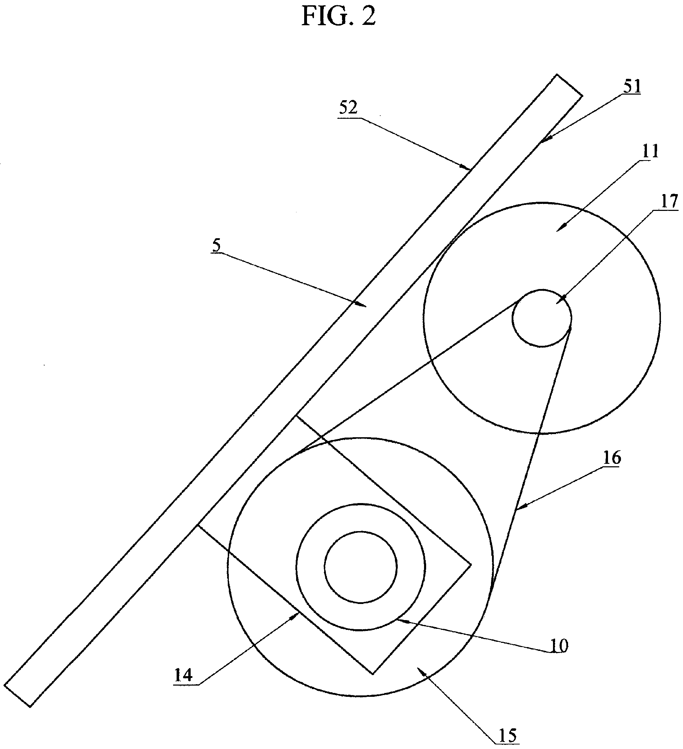

Der erfindungsgemäße Schubkarrenantrieb gemäß dem Ausführungsbeispiel nach Figur 1 ist in Figur 2 detaillierter dargestellt und verfügt über einen Träger in Form einer ebenen Platte 5 mit einer Vorderseite 51 und Rückseite 52. Auf der Vorderseite 51 der Platte 5 sind ein Elektromotor 11 und ein Reibrad 10, das über eine Lagerung 14 mit der Platte 5 verbunden ist, angebracht. Die Nabe des Elektromotors 11 ist mit einer Antriebsriemenscheibe 17 verbunden. Das Reibrad 10 ist auf einer Welle mit einer Abtriebswelle 15 verbunden. Zwischen der Antriebsriemenscheibe 17 und der Abtriebswelle 15 ist ein Riemen 16 gespannt. Die Spannvorrichtung für den Riemen 16 ist nicht dargestellt und aus dem Stand der Technik bekannt.

Die Platte 5 wird mittels einer Befestigungsvorrichtung - bestehend aus einer Verbindung 12 mit Haken 3 - mit der vorderen, oberen Kante der Wanne 9 verbunden und im vorderen schrägen Muldenbereich 1 oberhalb des Rades 2 mit der Rückseite 52 auf der Außenseite der Wanne 9 derart aufgesetzt, dass der Elektromotor 11 und das Reibrad 10 sich auf der der Wanne 9 abgewandten Seite befinden. In der Verbindung 12 befindet sich ein Langloch, durch welches eine Feststellschraube 18 in ein Gewinde in der Platte 5 greift; hierdurch lässt sich der Abstand zwischen Platte 5 und dem vorderen, oberen Kante der Wanne 9 stufenlos verstellen. Ferner wird die Platte 5 über zwei Federn 4, die auf der der Befestigungseinrichtung 3, 12 abgewandten Seite mit der Platte 5 verbunden sind, mit den Stützen 7 verspannt. Hierdurch wird bewirkt, dass die Platte 5 einerseits formschlüssig mit der Wanne 9 verbunden ist. Wesentlich ist, dass andererseits das Reibrad 10 durch die Federkraft der Federn 4 auf das Schubkarrenrad 2 gedrückt wird. Die Fixierung der Platte 5 an der Wanne 9 erfolgt zusätzlich durch den Anpressdruck des Schubkarrenrades 2 auf das Reibrad 10. Die Federn 4 sind derart zu dimensionieren, dass eine ausreichende Kraftübertragung vom Reibrad 10 auf das Schubkarrenrad 2 erfolgen kann. Der Haken 3 und seine Verbindung 12 zur Platte 5 sind derart zu dimensionieren, dass das Reibrad 10 in Kontakt mit dem Schubkarrenrad 2 treten kann und gleichzeitig ein sicheres Eingreifen des Hakens 3 in der Wanne 9 gewährleistet ist; die individuelle Einstellung an das jeweilige Schubkarrenmodell erfolgt durch oben genannte Verstelleinrichtung aus Langloch und Feststellschraube 18. Ein weiterer Vorteil einer stufenlosen Verstellbarkeit besteht darin, dass durch diese der Anpressdruck des Reibrades 10 auf das Schubkarrenrad 2 ebenfalls variabel einstellbar ist. Je nach Reifendruck des Schubkarrenrades 2 ist eine Einstellmöglichkeit erforderlich.

Die Stromversorgung des Elektromotors 11 kann ebenfalls fest mit der Platte 5 verbunden sein; jedoch ist es auch möglich, diese an einem anderen Ort am Schubkarren 13 anzuordnen und über Kabel zu verbinden.

Der Schwerpunkt der Antriebseinheit liegt durch die Platzierung zwischen Schubkarrenrad 2 und vorderen schrägen Muldenbereich 1 momentenneutral über dem Schubkarrenrad 2.

Wird der Elektromotor 11 - beispielsweise über einen nicht dargestellten kabelgebundenen oder via Funk arbeitenden Schalter an einem Holm 8 - in Gang gesetzt, so wird über den Riemen 16 das Reibrad 10 angetrieben; dieses treibt wiederum das Schubkarrenrad 2 an, so dass ein Vortrieb des Schubkarrens 13 ohne manuelle Krafteinleitung erfolgt.

Bei einer Anordnung gemäß Figur 1 muss sich zur Vorwärtsfahrt des Schubkarrens 13 das Schubkarrenrad 2 im Uhrzeigersinn drehen; das Reibrad 10 muss daher im Gegenuhrzeigersinn angetrieben werden. Die parallele Abtriebswelle 15 rotiert daher bei Vortrieb auch im Gegenuhrzeigersinn, wie auch die Antriebsriemenscheibe 17 des Elektromotors 11. Durch die Wirkrichtung der Antriebskraft und die Schräge des Muldenbereichs wird der Anpressdruck im Einsatz weiter erhöht.

Die Platte 5 der Antriebseinheit wird zur Montage über den Haken 3 und die Verbindung 12 mit der Wanne 9 verbunden. Mittels der Federn 4, welche mit den Stützen 7 verspannt werden, wird die Rückseite 52 der Platte mit dem Muldenbereich 1 unter der Wanne 9 formschlüssig verbunden, so dass das Reibrad 10 auf das Schubkarrenrad 2 drückt.

Zur Demontage werden die Federn 4 von den Stützen 7 abgenommen, so dass keine Spannung beziehungsweise Druck mehr auf die Antriebseinrichtung wirkt. Die Antriebseinrichtung kann abgenommen werden, indem der Haken 3 aus der Wanne 9 gezogen wird.

Die montierte Antriebseinheit kann nicht nur zum Antrieb des Schubkarrens dienen sondern auch optional zum aktiven Abbremsen optional bei gleichzeitiger Energierückgewinnung, hierbei fungiert der Elektromotor als Generator und die Batterie wird wieder aufgeladen, was die Einsatzzeit ohne Aufladung der Batterie an einem Ladegerät erhöht. Auf diese Weise kann beim Bergabfahren die Bremswirkung des Antriebs genutzt werden. Der Elektromotor ist vorzugsweise geschwindigkeitsregelbar.

Vorteilhaft ist auch eine Umschaltmöglichkeit der Antriebsrichtung, um ein angetriebenes Rückwärtsfahren zu ermöglichen.

Zur Einstellung des Abstandes der Platte 5 zum oberen Rand der Wanne 9 kann optional zur oben beschriebenen Einstellmöglichkeit via Langloch auch eine Einstellung über Schrauben, Spindeln oder einen klemmbaren Auszug eingesetzt werden.

Statt der Federn 4 können zum Abspannen der Platte 5 auch andere elastische Komponenten wie starke Gummibänder verwendet werden.

Eine optional mögliche feste Fixierung der Antriebseinheit mit der Wanne 9 oder dem Rahmen 6 mittels Schrauben, Nieten oder Schweißen ist nicht vorteilhaft, da in diesem Fall bei der Positionierung der Antriebseinheit bereits die notwendige Kraft zwischen Reibrad 10 und Schubkarrenrad 2 aufgebaut werden muss und bei Schwingungen im Aufbau die Übertragung der Antriebskraft leidet. In diesem Fall wäre notwendig, dass das Reibrad 10 federnd mit der Platte 5 verbunden ist und federnd auf das Schubkarrenrad 2 drückt.

Optional ist vorstellbar, dass das Reibrad 10 durch einen daneben platzierten Motor 11 mittels Welle angetrieben wird, als auch eine Einheit aus Reibrad 10 mit integriertem Nabenmotor. Der Einsatz eines Motors mit Getriebes ist ebenfalls optional denkbar.

Statt einer Antriebsriemenscheibe 17, einer Abtriebswelle 15 und eines Riemens 16, kann auch ein Antriebskettenrad, ein Abtriebskettenrad und eine Kette zum Einsatz kommen.

Die Rückseite 52 der Platte 5 sollte nach einer erfindungsgemäßen Variante einen hohen Reibwert aufweisen, um einen rutschfreien Sitz auf der Wanne 9 zu gewährleisten. Hierzu kann ein entsprechender Plattenbelag hilfreich sein.

Das Reibrad 10 sollte ebenfalls eine griffige Oberfläche oder Beschichtung aufweisen und in der Form dem Schubkarrenrad 10 angepasst werden können, um die Traktion und Auflagefläche zu erhöhen.

Um die Schubkarre 13 auf ebener Strecke auch ohne Antrieb nutzen zu können, kann in die Antriebseinheit optional ein Freilauf in Fahrtrichtung integriert werden.

Um die Antriebseinheit nicht für einen antriebsfreien Betrieb demontieren zu müssen, kann die flexibel nach unten abgespannte Antriebseinheit nach oben in Richtung oberer Rand der Wanne 9 gezogen werden, um den Kontakt des Reibrades 10 vom Schubkarrenrad 2 zu unterbinden. Dies kann mittels eines Seilzugs, einer Spindel oder eines Exzenters realisiert werden; mittels einer solchen Vorrichtung könnte der Abstand der Platte 5 vom oberen Rand der Wanne 9, in welchen der Haken 3 eingreift, verändert werden. Eine Spindel kann beispielsweise in die Verbindung 12 integriert sein und verbindet somit den oberen Haken 3 verstellbar mit der Platte 5. Das Reibrad 10 kann so vom Schubkarrenrad 2 schnell abgehoben und umgekehrt auch wieder aufgesetzt werden.

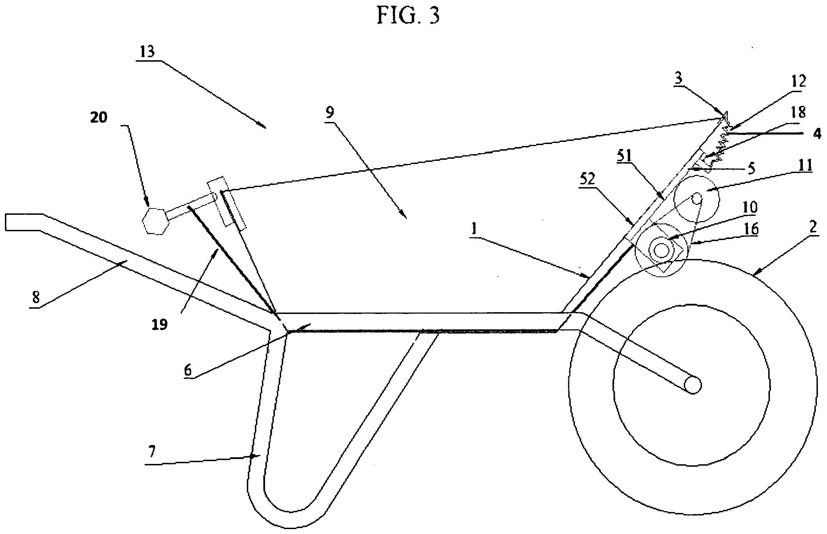

Figur 3 zeigt eine Variante des Schubkarrens mit erfindungsgemäßem Antrieb, die sich durch einige Details von der in Figur 1 gezeigten Varianten unterscheidet. Die Platte 5 mit dem Elektromotor 11 und Reibrad 10 ist über eine Feder 4 mit dem Haken 3 mit der vorderen, oberen Kante der Wanne 9 verbunden. Ein längenverstellbares Spannband 19 verbindet die Platte 5 mit einer einhakbaren Spannvorrichtung 20 in Form eines Spannhebels. Die Spannvorrichtung 20 ist auf der dem Schubkarrenrad 2 abgewandten Seite der Wanne 9, also auf der Seite der Holme 8 angebracht.

Die Platte 5 mit dem Elektromotor 11 und Reibrad 10 wird bei der Montage - wie bei der ersten Variante - im vorderen schrägen Muldenbereich 1 oberhalb des Schubkarrenrades 2 mit der Rückseite 52 auf der Außenseite der Wanne 9 derart aufgesetzt, dass der Elektromotor 11 und das Reibrad 10 sich auf der der Wanne 9 abgewandten Seite befinden. Die Spannvorrichtung 20 wird in die Wanne 9 eingehakt und dass Spannband 19 derart eingestellt, dass das Reibrad 10 gerade keinen Kontakt zum Schubkarrenrad 2 hat; die Spannvorrichtung 20 ist dabei derart eingestellt, dass das der Platte 5 abgewandte Ende des Spannbandes 19 der Platte 5 entgegen kommt. Wird die Spannvorrichtung 20 durch Umlegen des Spannhebels gespannt, so entfernt sich das der Platte 5 abgewandte Ende des Spannbandes 19 von der Platte 5. Das Spannband 19 zieht die Platte 5 entgegen der Feder 4, so dass das Reibrad 10 in Kontakt mit dem Schubkarrenrad 2 tritt und Kraft übertragen werden kann.

Die Rückseite 52 der Platte 5 kann hierbei glatt sein und optional über Magnete verfügen. Diese Magnete bewirken im ungespannten Zustand, dass die Platte 5 fest mit der Wanne 9 verbunden ist. Beim Betrieb, insbesondere beim Überfahrten von Unebenheiten, wird ein Abheben der Platte 5 von der Wanne 9 und des Reibrades 10 vom Schubkarrenrad 2 vermieden. Die Stärke der Magnete ist derart zu dimensionieren, dass einerseits beim Spannen eine Verschiebung der Platte 5 möglich ist und anderseits ein fester Halt der Platte 5 an der Wanne 9 gewährleistet wird.

Soll die Antriebseinheit gelöst, jedoch nicht demontiert werden, so wird die Spannvorrichtung 20 wieder umgelegt, so dass die Feder das Reibrad 10 vom Schubkarrenrad 2 zieht. Der Schubkarren 13 kann nun manuell über die Holme 8 angetrieben werden.

Zur Demontage wird das längenverstellbare Spannband 19 verlängert, so dass sowohl die einhakbaren Spannvorrichtung 20, als auch der Haken 3 ausgehakt werden können.

Optional kann anstelle oder zusätzlich zum Spannband 19 eine weitere Feder zwischen der Platte 5 und der Spannvorrichtung angeordnet sein.

Die erfindungsgemäße Antriebseinheit besitzt insbesondere folgende Vorteile.
- Die Antriebseinheit ist leicht montier- und wieder abnehmbar. Hierdurch können vorhandene handelsübliche Schubkarren nachgerüstet werden. Ein flexibler Einsatz an verschiedenen Schubkarren ist möglich.
- Die Antriebseinheit kann bei Nichtbenutzung einfach abgenommen werden und die Schubkarre kann dann auch ohne Antrieb genutzt werden.
- Die Antriebseinheit kann bei Anschaffung eines neuen Schubkarrens weiter genutzt werden.
- Bei schlechter Witterung oder über Winter kann die Antriebseinheit für sich trocken gelagert werden.
- Der Schwerpunkt der Antriebseinheit liegt durch die Platzierung zwischen dem Schubkarrenrad und vorderen schrägen Muldenbereich momentenneutral über dem Schubkarrenrad.
- Deutliche Kostenersparnis gegenüber auf dem Markt als Einheit erhältlichen Modellen.
- Deutliche Gewichtsersparnis gegenüber auf dem Markt als Einheit erhältlichen Modellen.
- Deutliche Platzersparnis gegenüber auf dem Markt als Einheit erhältlichen Modellen.

## Patentansprüche

1. Schubkarren (13), der über einen Rahmen (6) verfügt, mit dem eine Wanne (9), ein zentrales Schubkarrenrad (2), zwei Stützen (7) und zwei Holme (8) verbunden sind, wobei die Wanne (9) über einen vorderen, schrägen Muldenbereich (1) oberhalb des Schubkarrenrad (2) verfügt, mit einer Antriebseinheit, **dadurch gekennzeichnet, dass** die Antriebseinheit über einen Träger (5), welcher auf der Vorderseite (51) mit einem Motor (11) und einem Reibrad (10) verbunden ist, und eine Befestigungs- und Spannvorrichtung (3, 4, 12, 19, 20) verfügt, der Träger (5) mittels seiner Rückseite (52) an dem vorderen, schrägen Muldenbereich (1) der Wanne (9) anliegt, die Befestigungsvorrichtung (3, 12) in die vordere, obere Kante der Wanne (9) eingreift, das Reibrad (10) mit dem Schubkarrenrad (2) verbunden ist und die Spannvorrichtung (4, 19, 20) den Träger (5) derart nach unten zieht, dass das Reibrad (10) auf das Schubkarrenrad (2) drückt.

2. Schubkarren nach Anspruch 1, **dadurch gekennzeichnet, dass** das Reibrad (10) mit dem Motor über eine Kette, einen Zahn- oder Keilriemen (16) verbunden oder im Reibrad (10) ein Nabenmotor integriert ist.

3. Schubkarren nach Anspruch 1 oder 2, **dadurch gekennzeichnet, dass** das Reibrad (10) in der Form der Lauffläche an die Lauffläche des Schubkarrenrades (2) angepasst ist.

4. Schubkarren nach Anspruch 3, **dadurch gekennzeichnet, dass** das Reibrad (10) durch konkave Form der Lauffläche an die Lauffläche des Schubkarrenrades (2) angepasst ist.

5. Schubkarren nach einem der Ansprüche 1 bis 4, **dadurch gekennzeichnet, dass** die Spannvorrichtung (4, 19, 20) über Federn oder elastische Spannbändern verfügt.

6. Schubkarren nach einem der Ansprüche 1 bis 5, **dadurch gekennzeichnet, dass** der Motor (11) ein Elektromotor ist.

7. Schubkarren nach einem der Ansprüche 1 bis 6, **dadurch gekennzeichnet, dass** die der Motor (11) und / oder die Verbindung zum Reibrad (10) über einen Freilauf verfügt.

8. Schubkarren nach einem der Ansprüche 1 bis 7, **dadurch gekennzeichnet, dass** eine Vorrichtung zum Unterbrechen des Kontaktes zwischen Reibrad (10) und Schubkarrenrad (2) durch Verschiebung des Trägers (5) in Richtung der vorderen, oberen Kante der Wanne (9) vorhanden ist.

9. Verfahren zur Montage einer Antriebseinheit an einem Schubkarren nach einem der Ansprüche 1 bis 8, **dadurch gekennzeichnet, dass** die Befestigungsvorrichtung (3, 12) in die vordere, obere Kante der Wanne (9) eingehängt wird, der Träger (5) mittels seiner Rückseite (52) an dem vorderen, schrägen Muldenbereich (1) der Wanne (9) angelegt wird und die Spannvorrichtung (4, 19, 20) mit den Stützen (7), einem anderen mit dem Rahmen (6) verbundenen Teil oder der Oberkante der Wanne (9) auf der Seite der Home (8), vorzugsweise unter Zug, verbunden wird.

10. Verfahren zur Demontage einer Antriebseinheit von einem Schubkarren nach einem der Ansprüche 1 bis 8, **dadurch gekennzeichnet, dass** die Spannvorrichtung (4, 19, 20) entlastet und demontiert wird und anschließend die Befestigungsvorrichtung (3, 12) aus der vorderen, oberen Kante der Wanne (9) ausgehängt wird, während der Träger (5) vom Schubkarrenrad (2) abgehoben wird.

11. Verfahren zur Entkopplung einer Antriebseinheit von einem Schubkarren nach Anspruch 8, **dadurch gekennzeichnet, dass** durch Entlasten einer Spannvorrichtung (20), vorzugsweise dem Drehen eines Spannhebels oder eines Exzenters, Drehen einer Spindel oder Ziehen eines Seilzugs der Abstand zwischen dem Träger (5) und der vorderen, oberen Kante der Wanne (9) verringert und der Kontakt zwischen Reibrad (10) und Schubkarrenrad (2) unterbrochen werden.

## Claims

1. Wheelbarrows (13) with a frame (6) connecting a trough (9), a central wheelbarrow wheel (2), two supports (7) and two uprights (8), the trough (9) being equipped with a front slant trough region (1) above the wheelbarrow wheel (2), with a drive unit, **characterized in that** the drive unit via a support (5) mounted on the front side (51) with a motor (11) and a friction wheel (10), and a fastening and tensioning device (3, 4, 12, 19, 20), the carrier (5) bears by its rear side (52) against the front slant trough region (1) of the trough (9), the fastening device (3, 12) engages in the front, upper edge of the trough (9), the friction wheel (10) is connected to the wheelbarrow wheel (2), and the tensioning device (4, 19, 20) engages the carrier (5) downwards, **in that** the friction wheel (10) presses on the wheelbarrow wheel (2).

2. Wheelbarrows according to claim 1 , **characterized, in that** the friction wheel (10) is connected to the engine by means of a chain, a toothed belt or V-belt (16), or a hub motor is integrated in the friction wheel (10).

3. Wheelbarrows according to claim 1 or 2, **characterized, in that** the friction wheel (10) is adapted in the form of the running surface of the wheelbarrow wheel (2).

4. Wheelbarrows according to claim 3, **characterized, in that** the friction wheel (10) is adapted to the running surface of the wheelbarrow wheel (2) by a concave shape of the running surface.

5. Wheelbarrows according to any of claims 1 to 4, **characterized, in that** the tensioning device (4, 19, 20) has springs or elastic tensioning straps.

6. Wheelbarrows according to any of claims 1 to 5, **characterized, in that** the motor (11) is an electric motor.

7. Wheelbarrows according to any of claims 1 to 6, **characterized, in that** the motor (11) and / or the connection to the friction wheel (10) has a freewheel.

8. Wheelbarrows according to any one of claims 1 to 7, **characterized in** the presence of a device for interrupting the contact between the friction wheel (10) and the wheelbarrow wheel (2) by displacement of the support (5) in the direction of the front upper edge of the trough (9).

9. A method of assembling a drive unit on a wheelbarrow according to any one of claims 1 to 8, **characterized in that** the fastening device (3, 12) is hooked into the upper front edge of the trough (9), the carrier (5) by means of its rear side 52 is applied to the front slant trough region (1) of the trough (9), and the tensioning device (4, 19, 20) is provided with the supports (7), another part or the upper edge of the trough connected to the frame (6) (9) on the side of the uprights (8), preferably under tension.

10. A process for the disassembly of a driving unit of a wheelbarrow according to any one of claims 1 to 8, **characterized, in that** the tensioning device (4, 19, 20) is unloaded and disassembled, and subsequently the fastening device (3, 12) is suspended from the front, upper edge of the trough (9), while the carrier (5) is lifted off the wheelbarrow wheel (2).

11. A method for decoupling a driving unit of a wheelbarrow according to claim 8, **characterized, in that** the distance between the carrier (5) and the front, upper edge of the trough (9) is reduced by relieving a tensioning device (20), preferably rotating a tensioning lever or an eccentric, rotating a spindle or pulling a cable, and the contact between the friction wheel 10) and wheelbarrow wheel (2) are interrupted.

## Revendications

1. Brouettes (13) qui possèdent un châssis (6) auquel sont connectés une cuve (9), une roue centrale de la brouette (2), deux supports (7) et deux traverses (8), et dont la cuve (9) dispose d'une auge de devant oblique (1) au-dessus de la roue de la brouette (2), avec une unité d'entraînement, **caractérisé par** le lien d' un support (5) monté sur la face avant (51) avec un moteur (11) et une roue de friction (10) et possédant un dispositif de fixation et de serrage (3, 4, 12, 19, 20) qui relie le support (5) par l'intermédiaire de sa partie arrière (52) à l'auge de devant inclinée (1) de la cuve (9), le dispositif de fixation (3, 12) fixé dans le bord de devant supérieur de la cuve (9), la roue de friction (10) est reliée à la roue de la brouette (2) et le dispositif de serrage (4, 19, 20) traînant le support vers le bas (5) de telle manière que la roue de friction (10) appuie sur la roue de la brouette (2).

2. Brouettes selon la revendication 1, **caractérisé en ce que** le fait que la roue de friction (10) est intégrée par une chaîne, une courroie dentée ou trapézoïdale (16) ou **caractérisé par** l'intégration d'un moteur accessoire dans la roue de friction (10).

3. Brouettes selon la revendication 1 ou 2, **caractérisé en ce que** l'adaptation de la roue de friction (10) dans la forme de la bande de roulement à la bande de roulement de la roue de la brouette (2).

4. Brouettes selon la revendication 3, **caractérisé en ce que** l'adaptation de la roue de friction (10) par sa forme concave de sa bande de roulement à la bande de roulement de la roue de la brouette (2).

5. Brouettes selon l'une quelconque des revendications 1 à 4, **caractérisé en ce que** le dispositif de serrage (4, 19, 20) comportant des ressorts ou sangles élastiques.

6. Brouettes selon l'une quelconque des revendications 1 à 5, **caractérisé en ce que** le moteur (11) est un moteur électrique.

7. Brouettes selon l'une quelconque des revendications 1 à 6, **caractérisé en ce que** le fait que le moteur (11) et / ou la connexion à la roue de friction dispose/nt (10) d'une roue libre.

8. Brouettes selon l'une quelconque des revendications 1 à 7, **caractérisé en ce que** un dispositif destiné à interrompre le contact entre la roue de friction (10) et la roue de la brouette (2) par déplacement du support (5) dans la direction de l'arête de devant supérieure de la cuve (9),

9. Procédé d'assemblage d' une unité d'entraînement d'une brouette selon l'une quelconque des revendications 1 à 8, **caractérisé par** le dispositif de fixation (3, 12) qui est accrochée dans le bord de devant supérieur de la cuve (9), le support (5) qui est appliqué au moyen de sa face arrière (52) à l'auge de devant oblique (1) de la cuve (9) et le dispositif de serrage (4, 19, 20) qui est relié aux supports (7), à une autre pièce reliée au châssis (6) ou à la partie ou au bord supérieur de la cuve (9) se trouvant sur le côté des traverses (8), de préférence sous traction.

10. Procédé de démontage d'une unité d'entraînement d'une brouette selon l'une quelconque des revendications 1 à 8, **caractérisé en ce que** la décharge et le démontage du dispositif de serrage (4, 19, 20) et le démontage du dispositif de fixation (3, 12) du bord de devant supérieur de la cuve(9) tandis que le support (5) est soulevé de la roue de la brouette (2).

11. Procédé de découplage d' une unité d'entraînement d'une brouette selon la revendication 8, **caractérisé en ce que** la réduction de la distance entre le support (5) et le bord de devant supérieur de la cuve (9) par une décharge du dispositif de serrage (20), de préférence par la rotation d'un levier de traction ou d'un excentrique, par la rotation d'un pivot ou la traction d'un câble, et **caractérisé par** l'interruption du contact entre la roue de friction (10) et la roue de la brouette (2).
